# EUROPÄISCHE PATENTSCHRIFT

(11) **EP 4 341 065 B1**
(45) Veröffentlichungstag und Bekanntmachung des Hinweises auf die Patenterteilung: **14.05.2025**
(21) Anmeldenummer: 22731073.7
(22) Anmeldetag: 18.05.2022
(51) Int. Cl.: B29C 48/30, B29C 48/00, B29C 48/255, B29C 48/25, B29C 64/209, B33Y 10/00, B33Y 30/00

(54) **VORRICHTUNG ZUM AUFTRAGEN VON CLAY AUF EINE OBERFLÄCHE**
DEVICE FOR APPLYING CLAY TO A SURFACE
DISPOSITIF D'APPLICATION D'ARGILE SUR UNE SURFACE

(30) Priorität: 18.05.2021 DE 102021112854
(43) Veröffentlichungstag der Anmeldung: 27.03.2024
(73) Patentinhaber: Tartler, Udo, 64750 Lützelbach/Haingrund (DE); STAEDTLER SE, 90427 Nürnberg (DE)
(72) Erfinder: TARTLER, Udo, 64750 Lützelbach/Haingrund (DE); PRIOR, Arthur, Vassal, London SW9 6NJ (GB); SCHWEMMER, Judith, 91230 Happurg (DE)
(74) Vertreter: Onsagers AS
(86) Internationale Anmeldenummer: PCT/EP2022/063408
(87) Internationale Veröffentlichungsnummer: WO 2022/243358

(56) Entgegenhaltungen:
- DE-A1- 102016 109 816
- US-A1- 2016 113 293

## Beschreibung

Die vorliegende Erfindung betrifft eine Vorrichtung zum Auftragen von Clay auf eine Oberfläche insbesondere zur Herstellung von Modellen, mit einem Gehäuse mit einem Anschlussstutzen für einen Clay-Zuführungsschlauch und einer Clay-Abgabeöffnung.

Clay ist ein Werkstoff, der insbesondere für den Modellbau im Automobildesign verwendet wird. Aber auch Character-Designer zum Beispiel für Film, Cartoon und Videospiele, Industriedesigner, Künstler und Architekten verwenden diesen Werkstoff zum Modellieren ihrer dreidimensionalen Gestaltungen. Er ist eine zu diesem Zweck spezielle Weiterentwicklung des altbekannten Plastilins.

Bei Clay handelt es sich um eine bei bestimmten Temperaturen plastisch verformbare Masse üblicherweise auf Wachsbasis. Als Füllstoff wird bei den meisten Varianten Schwefel verwendet. Clay hat zumeist eine bräunliche oder graue Farbe, die die Sichtbarkeit einer modellierten Form, insbesondere zu deren Überprüfen beim Modellieren durch den Gestalter, gut ermöglicht.

Zum Beispiel vor der Markteinführung eines neuen Autos ist der Gestaltungsprozess von dessen neuer Karosserie langwierig und aufwendig: Zunächst finden Skizzen, Zeichnungen und 3d-CAD Anwendung. Aber auch heute werden schließlich Modelle des Fahrzeugs gebaut, üblicherweise in verschiedenen Maßstäben von 1:10 und 1:4 bis 1:1. Denn erst daran lassen sich Formen und Proportionen im großen Ganzen und im Detail wirklich gut beurteilen. Die Formen und Proportionen des Modells aus Clay lassen sich zudem auch fein und detailliert nacharbeiten und finishen. Denn Clay kann, bei großer Formstabilität bei Raumtemperatur, zum Beispiel gefräst, gehobelt, geschnitzt oder geschliffen werden. Aber auch nachträglicher Materialauftrag ist möglich, wobei der Clay zum Beispiel im Bereich des geplanten Materialauftrags mittels Warmluftgebläse oder Wärmestrahler erwärmt wird (auf Temperaturen nicht höher als im zweistelligen Celsius-Temperaturbereich). In diesem oberen Grenz-Temperaturbereich insbesondere um ungefähr 60 bis 70 °C lässt Clay sich plastisch verformen und geht im Wesentlichen homogene Verbindung ein mit etwa gleich warmem Clay-Material, das ergänzend aufgetragen wird. Abgekühlt ist die durch die Auftragung ergänzte Stelle wieder formstabil mit im Wesentlichen homogener Übergangsstelle bei sorgfältiger Bearbeitung und kann auch dort wieder auch durch Abtragung bearbeitet werden. Auch lackierbar ist Clay mittels bekannter Verfahrensschritte, bzw. mit Farbfolien zu belegen. So ist aus Clay insgesamt ein dem geplanten Produkt in Gestalt und Oberfläche äußerst nahekommendes, sogar identisches Modell herstellbar.

Für ein solches Modell wird üblicherweise zunächst ein Holz- oder Metallrahmen gefertigt, auf dem Platten (zum Beispiel Schaumplatten) etwa aus Polyurethan befestigt werden, um darauf Clay, als wie beschrieben modellierbare Außenschicht des Modells - zum Erzeugen einer gewünschten Clay-Schichtdicke üblicherweise wiederum schichtweise - aufzutragen und so ein Vormodell zu bilden, möglichst überall mindestens von der Größe des endgültigen Modells.

Dieser Auftrag erfolgt immer noch verbreitet von Hand. Üblicherweise wird der angewärmte Clay (unter 60°C) mit knetenden Handbewegungen aufgetragen und mittels spachtelartiger Werkzeuge und Klingen bearbeitet - und zwar in dem erwähnten Temperaturbereich des Clay, in dem dieser sich plastisch verformen lässt und so auch gut auf den Gestellplatten haftet. Zur besseren Haftung gibt es verschiedene bekannte Maßnahmen wie zum Beispiel das Aufbringen einer Versiegelung (zum Beispiel als Anstrich oder Spray) insbesondere auch zum Binden von Staub, und/oder das Ausbilden von Vertiefungen und/oder Widerhaken-Strukturen etwa durch Bohrungen oder das Einfräsen von Furchen, worin sich der Clay dann zusätzlich zur Haftung formschlüssig halten kann.

Beim und nach diesem Auftragen kann, solange noch nicht vollständig abgekühlt, die angestrebte Oberflächengestalt des Clay auch, mindestens bereichsweise, durch plastische Formgebung schon hergestellt oder zumindest durch entsprechende Vorformung und Konturierung vorbereitet werden.

Bekannt sind aber auch maschinelle Vorrichtungen und Verfahren, zum Beispiel aus der DE 10 2016 109 816. Schwierigkeiten zeigen sich im Stand der Technik beim maschinellen Verarbeiten mittels einer solchen Vorrichtung: nämlich betreffend das innige Verbinden aus der Zuführleitung des Clay auf eine bereits aufgetragene Schicht, aber auch betreffend die Homogenität des plastifizierten Clay beim Austritt aus der Zuführleitung, wo sich zum Beispiel im Randbereich des austretenden Clay eine von der Mitte des Strangs abweichende Konsistenz zeigt.

Der vorliegenden Erfindung liegt die Aufgabe zugrunde, eine Vorrichtung zum maschinellen Auftragen von Clay insbesondere zur Herstellung von Modellen zu schaffen, die den Modellbau unter Verwendung von Clay als Formmasse vereinfacht und beschleunigt.

Eine erfindungsgemäße Vorrichtung dient zum Auftragen von Clay auf eine Oberfläche insbesondere zur Herstellung von Vormodellen, wie einleitend beschrieben. Die Vorrichtung hat ein Gehäuse mit einem Anschlussstutzen für eine Clay-Zuführungsleitung, zum Beispiel einen flexiblen (ggf. beheizten) Hochdruckschlauch, um Bewegung der Vorrichtung über die Oberfläche, zum Beispiel von Hand, aber auch mittels Roboterarm oder CNC Anlage, möglichst frei zu ermöglichen. Und das Gehäuse hat eine Clay-Abgabeöffnung.

Erfindungsgemäß nun hat die Vorrichtung eine Scheibe, die Clay-dicht in einer Clayabgabe-Flanschöffnung sitzt, und zwar drehbar und Motor-angetrieben. Dabei verschließt die Scheibe diese Flanschöffnung, weist aber die (mindestens eine) Abgabeöffnung auf, durch die der in die Vorrichtung zugeführte Clay austreten kann. Und außenseitig weist die Scheibe mindestens eine Erhöhung auf.

Die Erhöhung ist sozusagen ein Massierwulst, ein "Wobbler", der dazu dient, dass der Clay durch dessen kreisende Bewegungen auf die Oberfläche auf- (und in die Oberfläche ein- )massiert wird - nämlich insbesondere, wenn die Oberfläche bereits aus Clay besteht, etwa weil bereits eine Clay-Lage aufgetragen wurde.

Dazu ist es besonders bevorzugt, dass (in beliebiger Kombination oder einzeln oder mit allem) die (mindestens eine) Erhöhung (bei mehreren alle oder mindestens eine der Erhöhungen - auch verschiedene der Erhöhungen mit unterschiedlichen der Merkmale) auf der Scheibe
- exzentrisch angeordnet ist und/oder
- sich entlang dem radialen Rand der Scheibe erstreckt und/oder
- mit einem Bereich der Außenseite oder der gesamten Außenseite der Scheibe eine stetige Oberfläche bildet und/oder
- eine sich auch radial erstreckende Kante aufweist.

Dazu ist es auch besonders bevorzugt, dass die (mindestens eine) Abgabeöffnung in der Scheibe
- ein Langloch ist, das sich in der Scheibe konzentrisch kreissegmentförmig erstreckt und/oder
- mehrere Abgabeöffnungen gleichmäßig auf einen Umfang um die Drehachse der Scheibe verteilt sind.

Besonders bevorzugt ist es auch, den Randbereich der Clayabgabe-Flanschöffnung mittels formschlüssig passender Hülsen zu gestalten (mindestens einer), die sich abnehmen und wieder aufsetzen lassen und so den Öffnungsrand um die Länge der jeweiligen Hülse weiter axial aus dem Gehäuse, nach vorn, versetzen (und so den Wobbler oder zumindest die Scheibe tiefer in der Öffnung verschwinden lassen können) oder in das Gehäuse, axial nach hinten, versetzen (und so die Scheibe oder zumindest den Wobbler weiter aus der Öffnung hinausragen lassen können).

Insbesondere um den Clay zusätzlich zu homogenisieren und vermischen, können in der Vorrichtung insbesondere im Bereich der Abgabeleitung auch ein Mischer und/oder Propeller oder Flügelrad (insbesondere zwei Flügelräder vorzugsweise mit gegenläufig geneigten Flügeln - auch noch mehrere - insbesondere axial zueinander beabstandet) angeordnet sein. Diese können ebenfalls vom Motor drehangetrieben sein. Dazu sitzen die Flügelräder dann vorzugsweise auf einer Antriebswelle zusammen mit dem erfindungsgemäßen Abgabeöffnungs-Propeller.

Alternativ können die Flügelräder und ihre Lagerung aber auch so gestaltet sein, dass die Flügelräder nicht aktiv durch den Antrieb angetrieben werden, sondern entweder an der Rohrwand gehalten werden und so als feststehende Flügelräder dienen, oder auf der Welle zum Beispiel mit Durchgangsloch "fliegend", frei drehend, gelagert sind, so dass sie durch den hindurchfließenden Clay, je nach ihrer Schaufelneigung, in eine Drehungrichtung angetrieben werden und auf diese Weise den Clay zusätzlich homogenisieren und vermischen. Entsprechendes gilt für den Mischer.

Weitere Vorteile, Ausgestaltungen und Details der Erfindung werden im Folgenden in der Beschreibung von Ausführungsbeispielen mit Bezug auf die beigefügten Figuren beschrieben:
- Figur 1: zeigt vier Ansichten einer erfindungsgemäßen Vorrichtung, nämlich zwei alternative Längsschnitte, einmal mit Mischer und einmal mit zwei axial zueinander beabstandeten Flügelrädern drehangetrieben auf der Motorwelle, sowie darunter eine Draufsicht und rechts daneben eine räumliche Ansicht,
- Figur 2: zeigt die Ansichten der erfindungsgemäßen Vorrichtung aus Figur 1 mit einer alternativen Hülse an der Clayabgabe-Flanschöffnung,
- Figur 3: zeigt neun Ansichten der erfindungsgemäßen Wobblerscheibe 14 aus Figur 1 und 2,
- Figur 4 bis 6: zeigen drei Ansichten einer erfindungsgemäßen Vorrichtung, nämlich einen Längsschnitt sowie darunter eine Seitenansicht und rechts daneben eine räumliche Ansicht, jeweils mit unterschiedlich ausgebildeten Clayabgabe-Flanschöffnungen und unterschiedlichen Wobbler-Scheiben,
- Figur 7 bis 20: zeigen jeweils sechs Ansichten einer erfindungsgemäßen Wobblerscheibe 14 aus Figur 1 und 2

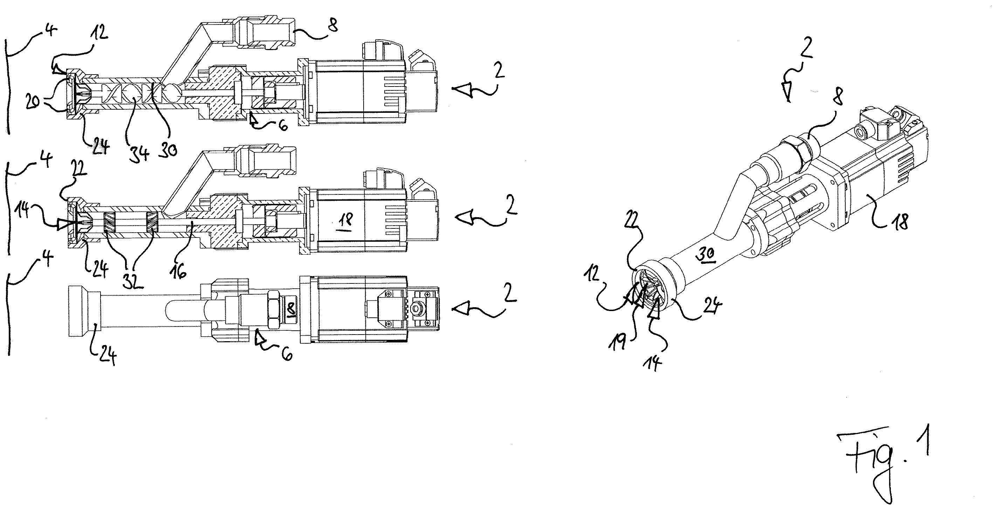

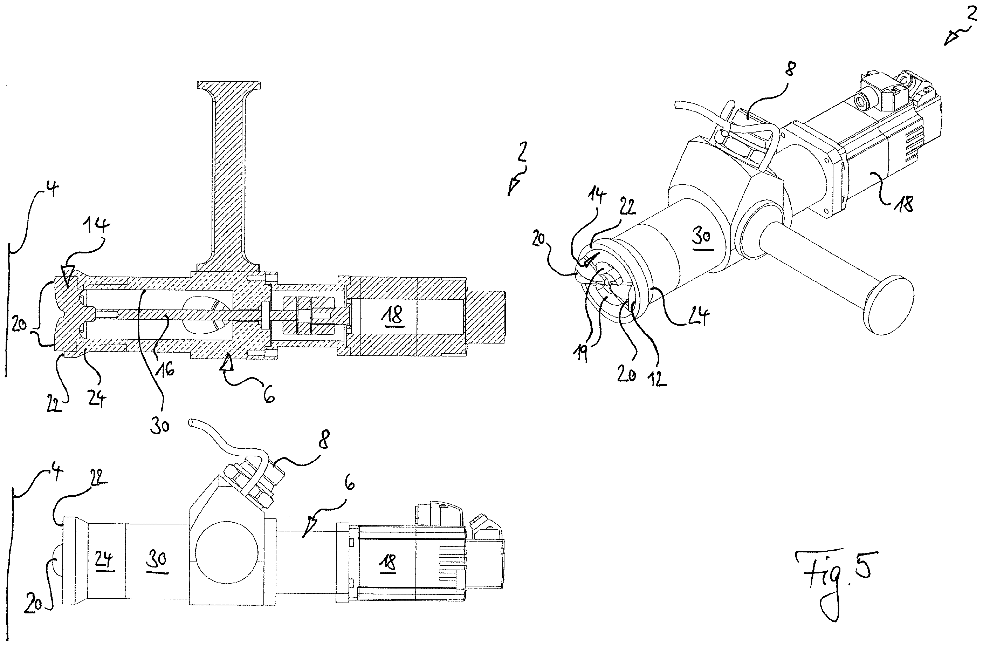

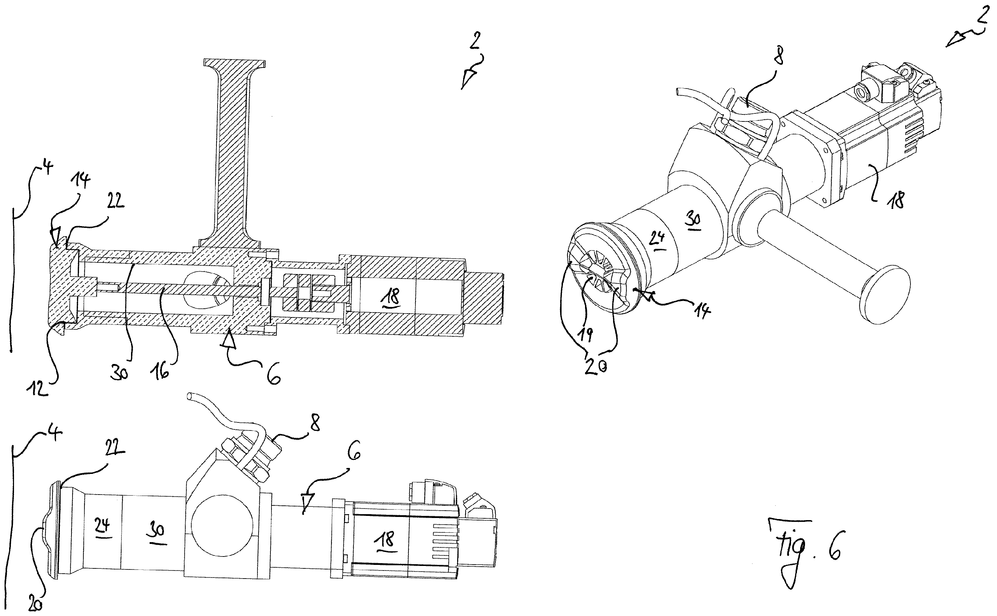

Die Figuren 1 und 2 und 4 bis 6 zeigen eine erfindungsgemäße Vorrichtung 2 zum Auftragen von Clay (nicht dargestellt) auf eine Oberfläche 4 zur Herstellung eines Vormodells 4, wie einleitend beschrieben. Die Vorrichtung 2 hat ein Gehäuse 6 mit einem Anschlussstutzen 8 für eine Clay-Zuführungsleitung (nicht dargestellt), nämlich einen flexiblen (beheizten) Hochdruckschlauch (nicht dargestellt), um Bewegung der Vorrichtung 2 über die Oberfläche 4 (zum Beispiel von Hand, aber auch mittels Roboterarm) möglichst frei zu ermöglichen. Und das Gehäuse 6 hat eine Clayabgabe-Flanschöffnung 12.

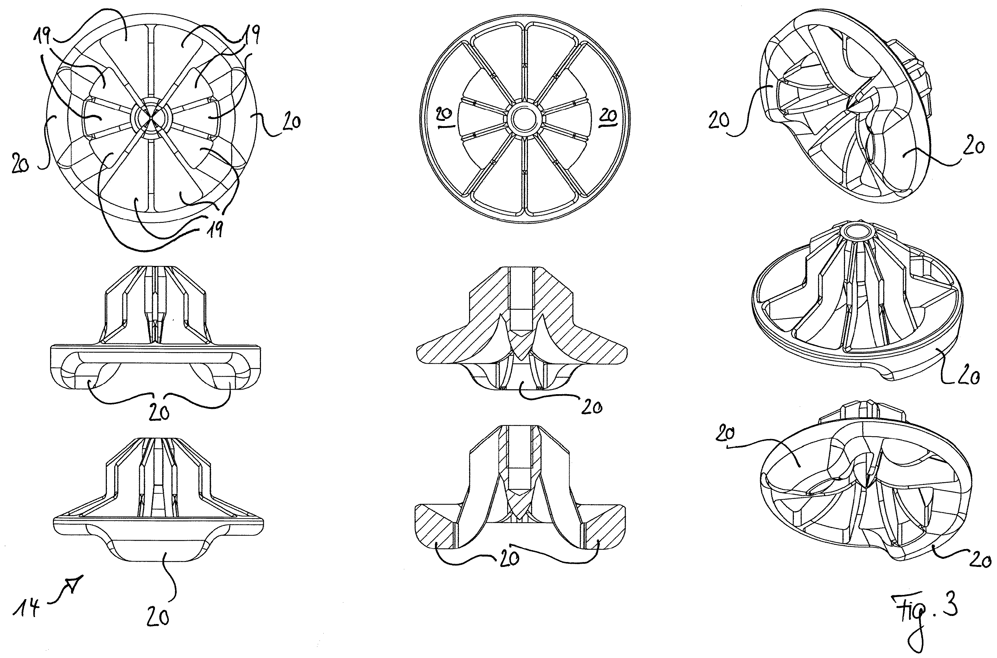

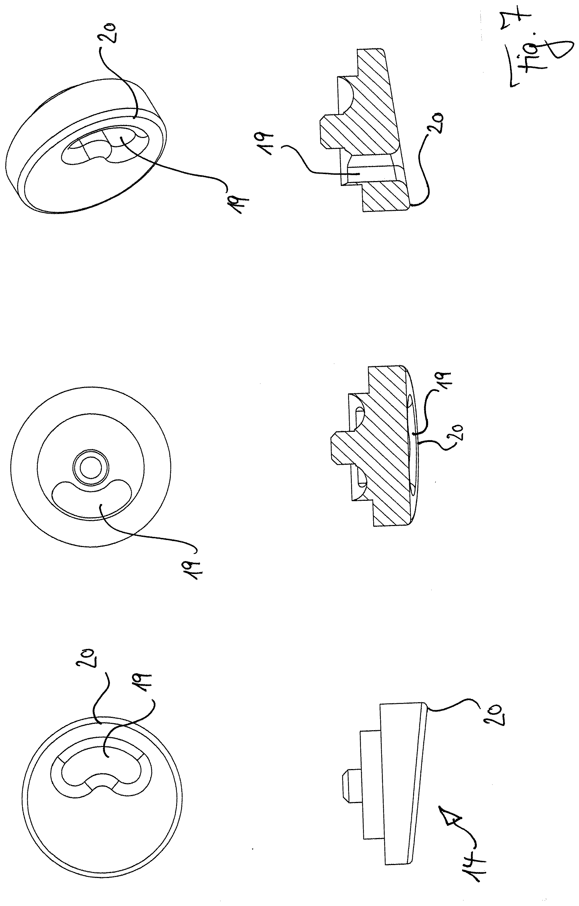

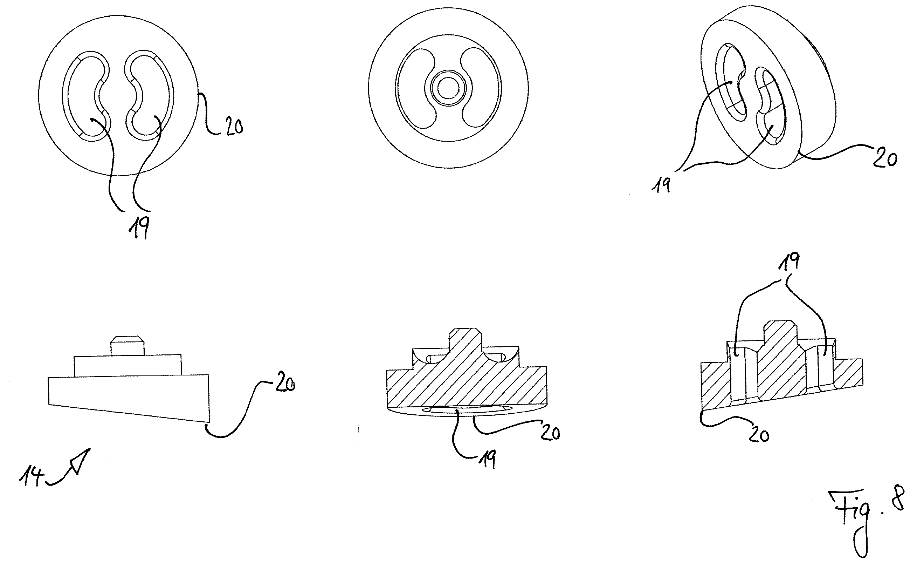

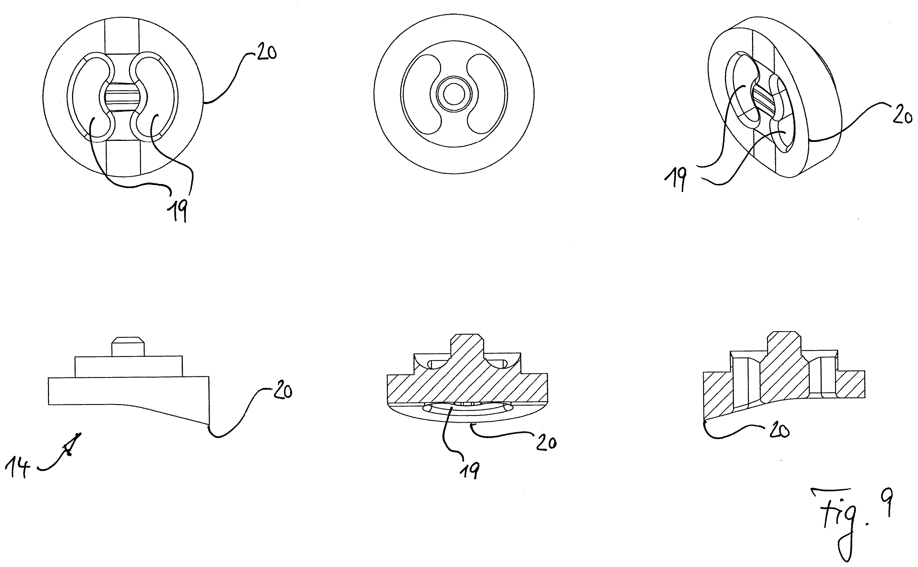

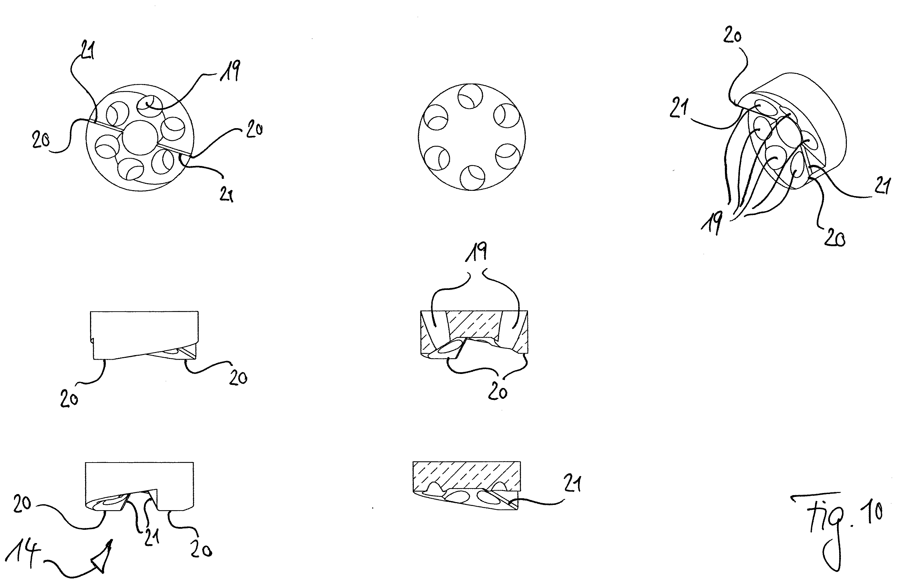

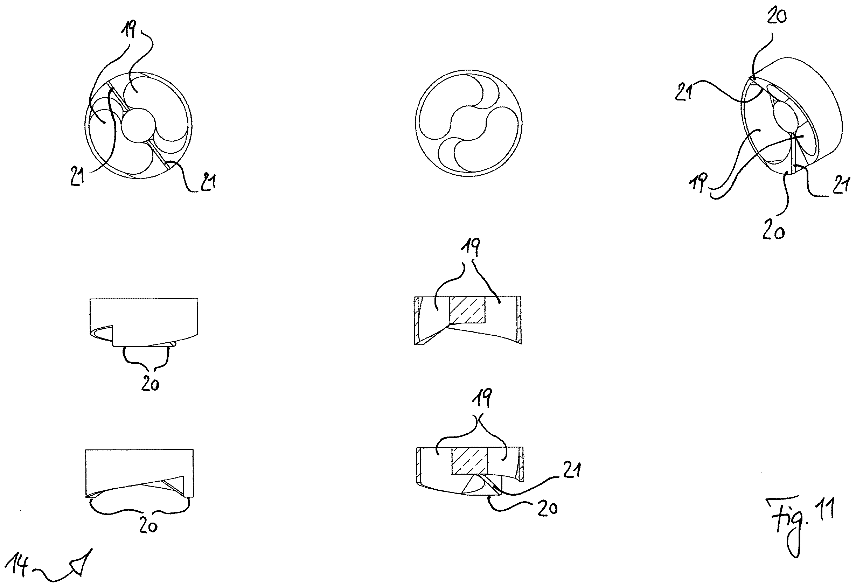

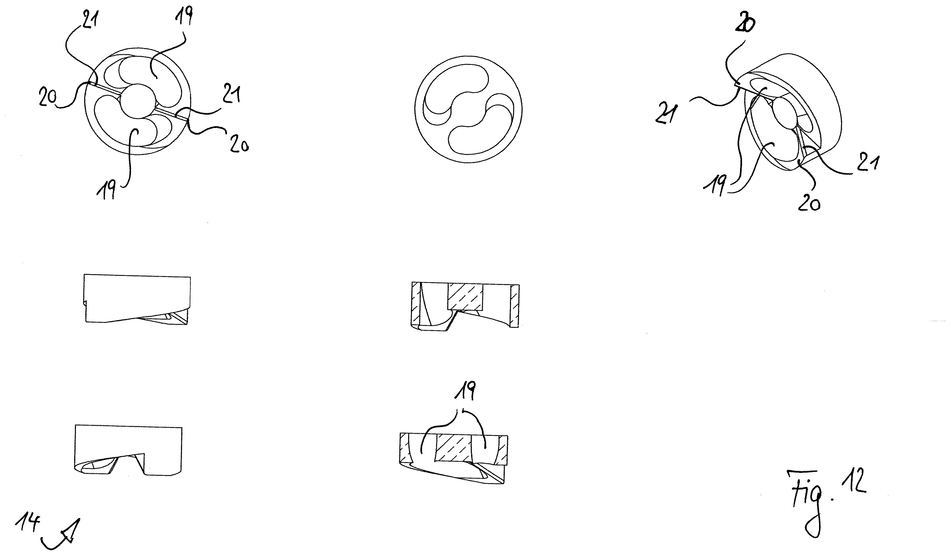

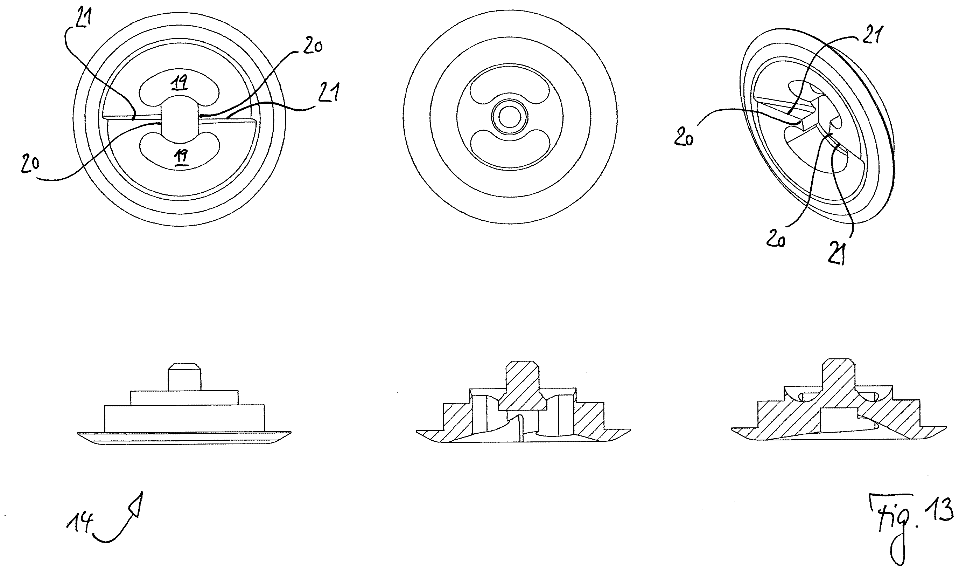

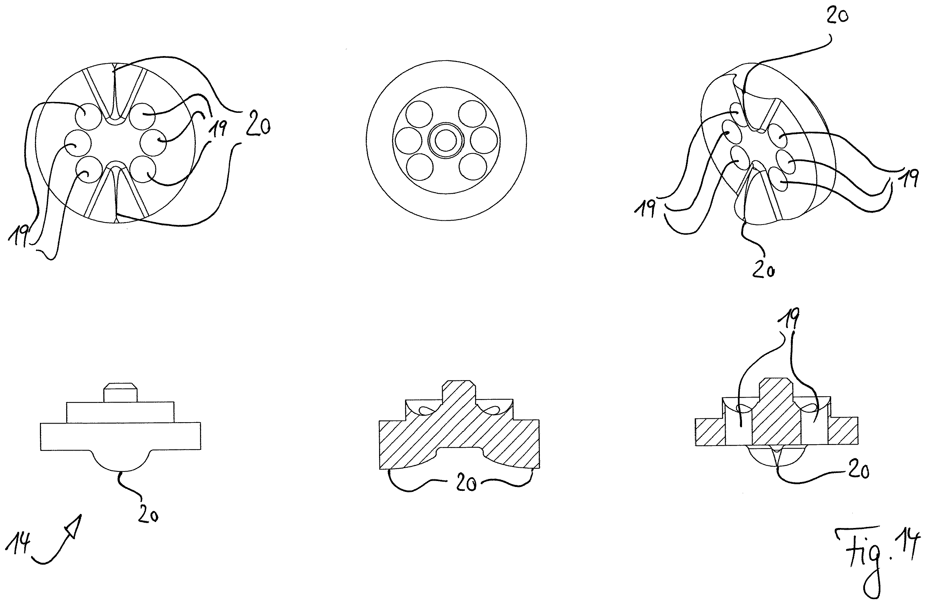

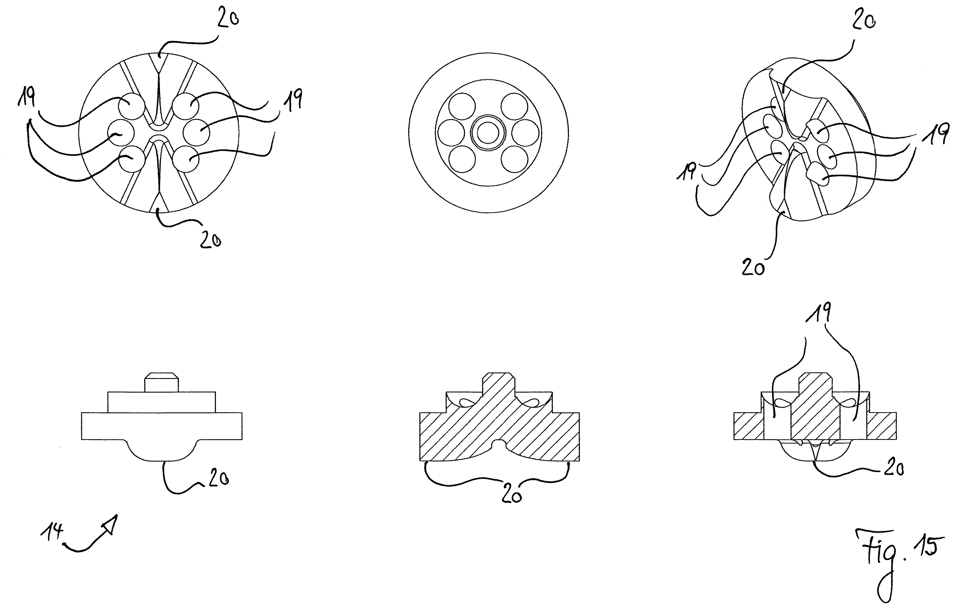

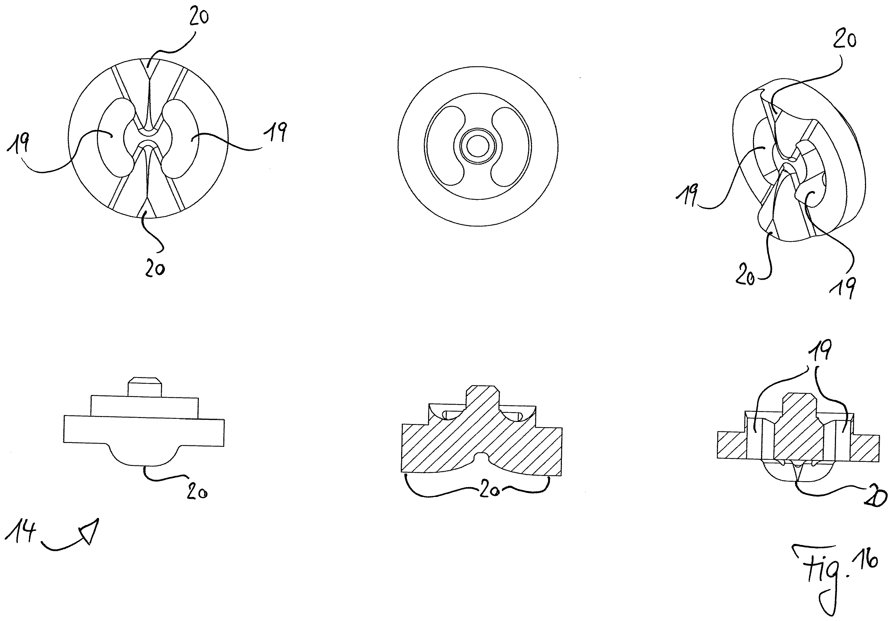

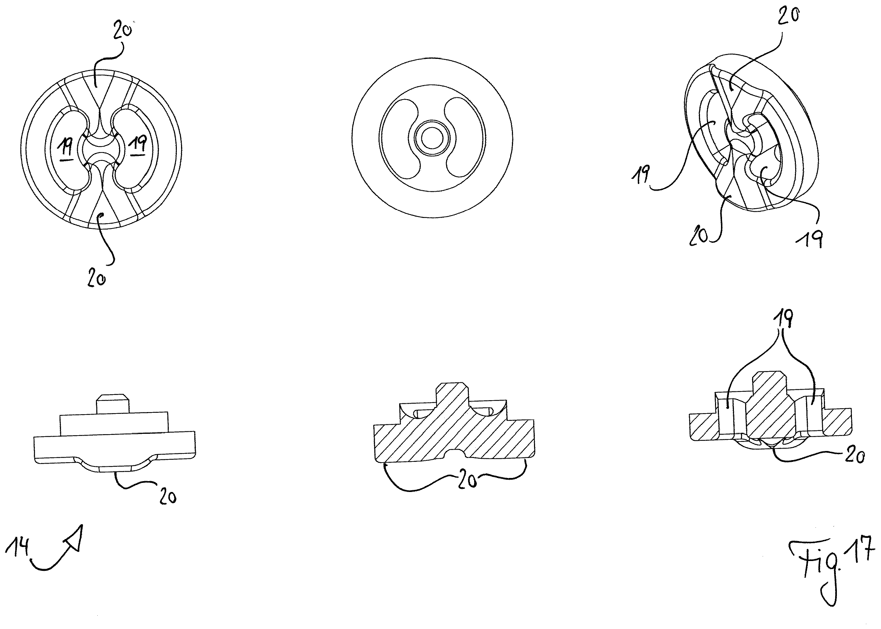

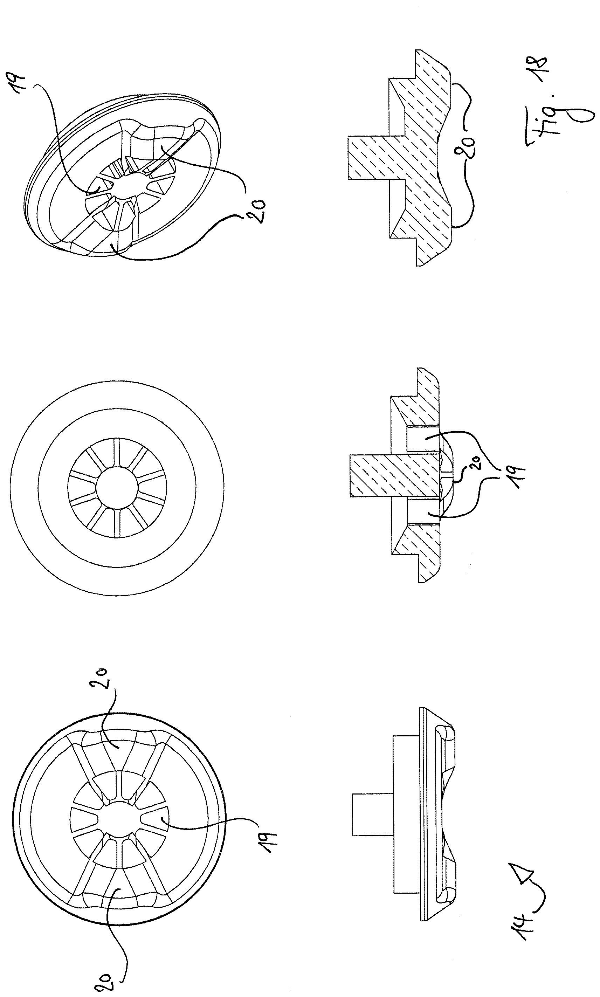

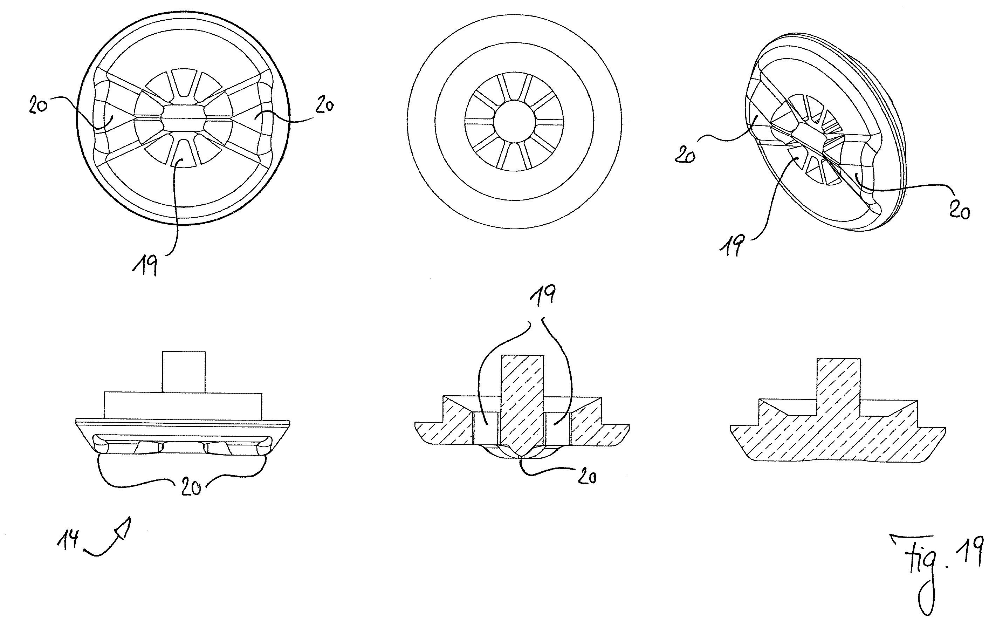

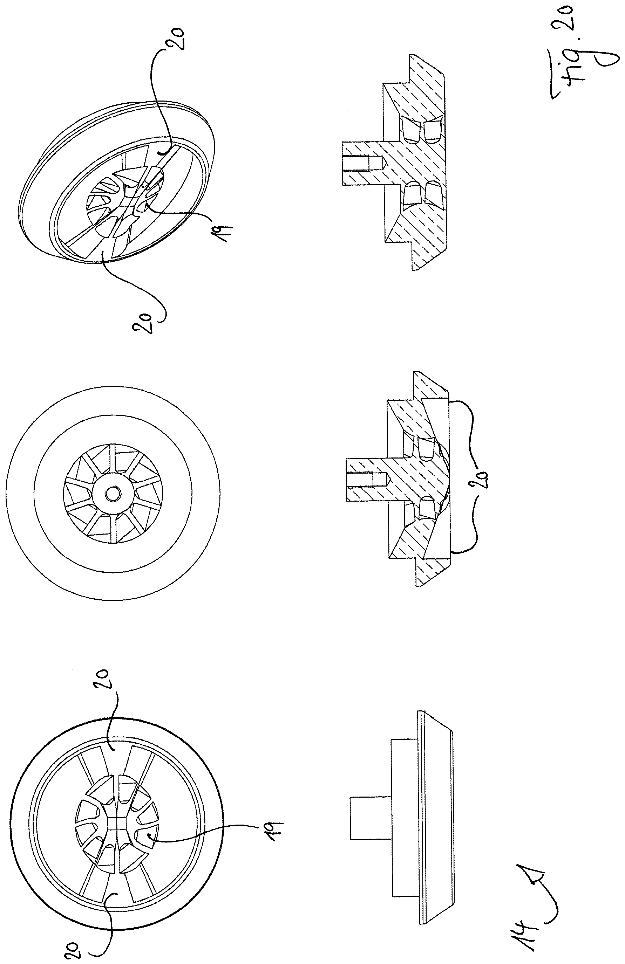

Im Bereich der Abgabeöffnung 12 hat jede der Vorrichtungen 2 eine Scheibe 14, die über eine Antriebswelle 16 von einem Motor 18 angetrieben ist. Die Figuren 3 und 7 bis 20 zeigen die jeweiligen Scheiben einzeln jeweils in sechs Ansichten.

Erfindungsgemäß nämlich hat die Vorrichtung 2 eine Scheibe, die Clay-dicht in der Clayabgabe-Flanschöffnung 12 sitzt, und zwar wie gesagt drehbar und Motor-angetrieben. Dabei verschließt die Scheibe 14 diese Flanschöffnung 12 - weist allerdings zum Abgeben des Clay (mindestens eine) Abgabeöffnung 19 auf, durch die der in die Vorrichtung 2 zugeführte Clay austreten kann.

Und außenseitig weist die Scheibe 14 mindestens eine Erhöhung 20 auf.

Die Erhöhung 20 ist sozusagen ein Massierwulst, ein "Wobbler", der dazu dient, dass der Clay durch dessen kreisende Bewegungen auf die Oberfläche 4 auf- (und in die Oberfläche ein-)massiert wird - nämlich insbesondere, wenn die Oberfläche 4 bereits aus Clay besteht, etwa weil bereits eine Clay-Lage aufgetragen wurde.

Die Figuren 3 und 7 bis 20 zeigen, dass in den Figuren jeweils zwei Erhöhungen 21 auf der Scheibe 14
- exzentrisch angeordnet sind und/oder
- sich entlang dem radialen Rand der Scheibe 14 erstrecken und/oder
- mit einem Bereich der Außenseite oder der gesamten Außenseite der Scheibe 14 eine stetige Oberfläche bilden und/oder
- eine sich auch radial erstreckende Kante 21 aufweist.

Dazu ist es auch besonders bevorzugt, dass die (mindestens eine) Abgabeöffnung 19 in der Scheibe 14
- ein Langloch ist, das sich in der Scheibe konzentrisch kreissegmentförmig erstreckt und/oder
- mehrere Abgabeöffnungen 19 gleichmäßig auf einen Umfang um die Drehachse 16 der Scheibe 14 verteilt sind.

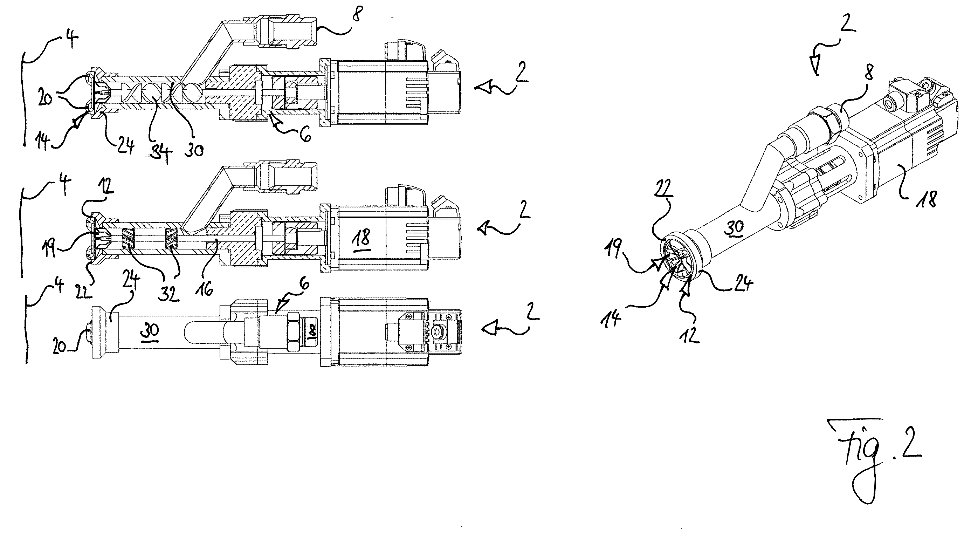

Um diese Funktionen insbesondere zum Auftragen auf ebenen oder konvexen Oberflächen 4 weiter zu begünstigen, weist zunächst die Flanschöffnung 12 einen in einer Ebene liegenden Rand 22 auf. Die Scheibe 14 gemäß Figur 1 ragt nicht aus der Flanschöffnung 12 hinaus - gemäß Figur 2 dagegen ragt der Wobbler 20 aus der Flanschöffnung 12 hinaus:
Das Gehäuse 6 in Figur 1 und 2 ist zwischen diesen Konstellation einstellbar und veränderbar. Dazu ist der Bereich des Randes 22 der Abgabeöffnung 12 durch eine formschlüssig passende Hülse 24 gestaltet, sich abnehmen (und wieder aufsetzen) und durch eine andere Hülse 24 ersetzen zu lassen. Durch Aufsetzen der einen Hülse 24 (Figur 1) kann der Öffnungsrand 22 der Hülse 24 weiter aus dem Gehäuse 6, nach vorn (in der Figur nach links), versetzt werden, so dass auch die Erhöhung, der Wobbler 20, in der Flanschöffnung 12 verschwindet. Bei Verwendung einer kürzeren Hülse 24 gemäß Figur 2 schaut der Massierwulst 20 derselben Scheibe 14 aus der Flanschöffnung 12 heraus.

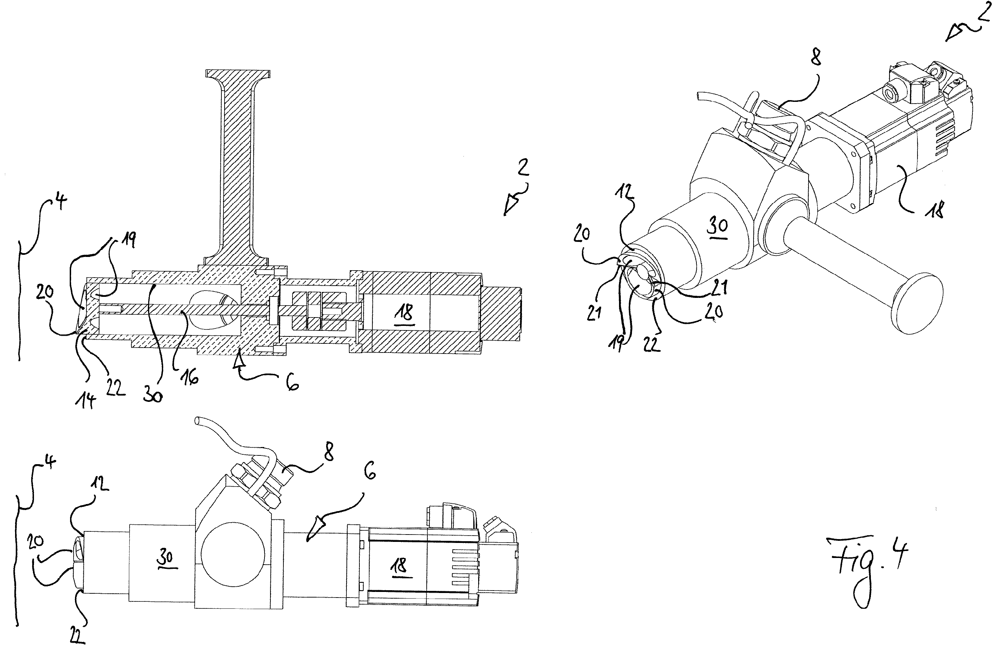

Oder durch Auswechseln der Hülse 24 (gemäß Figur 4 bis 6) lässt sich der Öffnungsrand 26 der Hülse 24 auch an die verschiedenen in Figur 4 bis 6 jeweils eingesetzten Scheiben 14 Clay-dicht (und/oder den Öffnungsrand 22 funktional wie beschrieben gestaltend) anpassen.

Insbesondere um den Clay zusätzlich zu homogenisieren und vermischen, können in der Vorrichtung 2 insbesondere im Bereich der Abgabeleitung 30 auch ein Mischer 34 und/oder Propeller oder Flügelrad 32 (insbesondere zwei Flügelräder 32 vorzugsweise mit gegenläufig geneigten Flügeln - auch noch mehrere - insbesondere axial zueinander beabstandet) angeordnet sein. Diese können ebenfalls vom Motor 18 drehangetrieben sein. Dazu sitzen die Flügelräder 32 dann vorzugsweise auf einer Antriebswelle 16 zusammen mit Scheibe 14.

Alternativ können die Flügelräder 32 und ihre Lagerung aber auch so gestaltet sein, dass die Flügelräder nicht aktiv durch den Antrieb 18 angetrieben werden, sondern entweder an der Rohrwand 30 gehalten werden und so als feststehende Flügelräder dienen, oder auf der Welle 16 zum Beispiel mit Durchgangsloch "fliegend", frei drehend, gelagert sind, so dass sie durch den hindurchfließenden Clay (nicht dargestellt), je nach ihrer Schaufelneigung, in eine Drehungrichtung angetrieben werden und auf diese Weise den Clay zusätzlich homogenisieren und vermischen. Entsprechendes gilt für den Mischer 34.

### Bezugszeichen

Vorrichtung 2
Oberfläche, Vormodell 4
Gehäuse 6
Anschlussstutzen 8
Clayabgabe-Flanschöffnung 12
Scheibe 14
Antriebswelle 16
Motor 18
Clay-Abgabeöffnung 19
Erhöhung, Massierwulst, Wobbler 20
Kante 21
Rand 22 der Flanschöffnung 12
Hülse 24
Clay-Abgabeleitung 30
Propeller oder Flügelrad 32
Mischer 34

## Patentansprüche

1. Vorrichtung (2) zum Auftragen von Clay auf eine Oberfläche (4), insbesondere zur Herstellung von Automobildesign-Modellen, mit einem Gehäuse (6) mit einem Anschlussstutzen (8) für eine Clay-Zuführungsleitung und mit einer Clay-Abgabeöffnung (19), **gekennzeichnet durch** eine Scheibe (14), die
- Clay-dicht in einer Clayabgabe-Flanschöffnung (12) drehbar und Motor-angetrieben sitzt und
- die Abgabeöffnung (19) aufweist und diese Flanschöffnung (12) im Übrigen verschließt und
- außenseitig eine Erhöhung (20) aufweist.

2. Vorrichtung (2) nach Anspruch 1, **dadurch gekennzeichnet, dass** die Erhöhung (20) auf der Scheibe (14) exzentrisch angeordnet ist.

3. Vorrichtung (2) nach einem der vorhergehenden Ansprüche, **dadurch gekennzeichnet, dass** die Erhöhung (20) sich entlang dem radialen Rand (22) der Scheibe (14) erstreckt.

4. Vorrichtung (2) nach einem der vorhergehenden Ansprüche, **dadurch gekennzeichnet, dass** die Erhöhung (20) mit einem Bereich der Außenseite oder der gesamten Außenseite der Scheibe (14) eine stetige Oberfläche (4) bildet.

5. Vorrichtung (2) nach einem der vorhergehenden Ansprüche, **dadurch gekennzeichnet, dass** die Erhöhung (20) eine sich auch radial erstreckende Kante (21) aufweist.

6. Vorrichtung (2) nach einem der vorhergehenden Ansprüche, **dadurch gekennzeichnet, dass** die Abgabeöffnung (19) mindestens ein Langloch ist, das sich in der Scheibe (14) konzentrisch kreissegmentförmig erstreckt.

7. Vorrichtung (2) nach einem der vorhergehenden Ansprüche, **dadurch gekennzeichnet, dass** mehrere Abgabeöffnungen (19) gleichmäßig auf einen Umfang um die Drehachse der Scheibe (14) verteilt sind.

8. Vorrichtung (2) nach einem der vorhergehenden Ansprüche, **dadurch gekennzeichnet, dass** in der Abgabeleitung (30) auch mindestens ein Mischer (34) und/oder Flügelrad (32) vom Clay durchströmbar angeordnet sind.

## Claims

1. Device (2) for applying clay to a surface (4), in particular for producing automobile design models, having a housing (6) with a connection piece (8) for a clay supply line and with a clay discharge opening (19), **characterized by** a disc (14) which
- is placed Clay-tight in a clay dispensing flange opening (12) and is rotatable and motor-driven and
- has the discharge opening (19) and otherwise closes said flange opening (12) and
- has an elevation (20) on the outside.

2. Device (2) according to claim 1, **characterized in that** the elevation (20) is arranged eccentrically on the disc (14).

3. Device (2) according to one of the preceding claims, **characterized in that** the elevation (20) along the radial edge (22) of the disc (14).

4. Device (2) according to one of the preceding claims, **characterized in that** the elevation (20) forms a continuous surface (4) with a region of the outer side or the entire outer side of the disc (14).

5. Device (2) according to one of the preceding claims, **characterized in that** the elevation (20) also has a radially extending edge (21).

6. Device (2) according to one of the preceding claims, **characterized in that** the discharge opening (19) is at least one elongated hole which extends concentrically in a circular segment shape in the disc (14).

7. Device (2) according to one of the preceding claims, **characterized in that** a plurality of discharge openings (19) are arranged uniformly on a circumference around the axis of rotation of the disc (14) are distributed.

8. Device (2) according to one of the preceding claims, **characterized in that** at least one mixer (34) and/or impeller (32) are also arranged in the discharge line (30) through which the clay can flow.

## Revendications

1. Dispositif (2) pour l'application d'argile sur une surface (4), en particulier pour la fabrication de modèles de design automobile, comprenant un boîtier (6) avec une tubulure de raccordement (8) pour une ligne d'alimentation en argile et avec une ouverture de distribution d'argile (19), **caractérisé par** un disque (14) qui est
- est monté de manière rotative et motorisée dans une ouverture de bride de distribution d'argile (12), et
- l'ouverture de distribution (19) et ferme par ailleurs cette ouverture à bride (12) et
- présente une surélévation (20) du côté extérieur

2. Dispositif (2) selon la revendication 1, **caractérisé en ce que** la surélévation (20) est disposée de manière excentrée sur le disque (14).

3. Dispositif (2) selon l'une quelconque des revendications précédentes, **caractérisé en ce que** la surélévation (20) le long du bord radial (22) du disque (14).

4. Dispositif (2) selon l'une des revendications précédentes, **caractérisé en ce que** la surélévation (20) forme une surface continue (4) avec une zone de la face extérieure ou la totalité de la face extérieure du disque (14).

5. Dispositif (2) selon l'une des revendications précédentes, **caractérisé en ce que** la surélévation (20) présente un bord (21) s'étendant également radialement.

6. Dispositif (2) selon l'une quelconque des revendications précédentes, **caractérisé en ce que** l'orifice de distribution (19) est au moins un trou oblong s'concentriquement en forme de segment de cercle dans le disque (14).

7. Dispositif (2) selon l'une des revendications précédentes, **caractérisé en ce que** plusieurs orifices de distribution (19) sont répartis uniformément sur une circonférence autour de l'axe de rotation du disque (14) sont répartis.

8. Dispositif (2) selon l'une des revendications précédentes, **caractérisé en ce qu'**au moins un mélangeur (34) et/ou une hélice (32) sont également disposés dans la conduite de distribution (30) de manière à pouvoir être traversés par l'argile.
